# EUROPEAN PATENT APPLICATION

(11) **EP 2 085 127 A1**
(43) Date of publication of application: **05.08.2009**
(21) Application number: 07823063.8
(22) Date of filing: 04.10.2007
(51) Int. Cl.: A63F 13/02

(54) **FOLDING SUPPORTING STRUCTURE FOR VIDEO GAME PEDALS AND STEERING WHEEL**

(30) Priority: 11.10.2006 ES 200602587
(71) Applicant: López Beltrán, Julián, 12005 Castellón (ES); López Beltrán, Diego, 12005 Castellón (ES)
(72) Inventor: López Beltrán, Julián, 12005 Castellón (ES); López Beltrán, Diego, 12005 Castellón (ES)
(74) Representative: Ungria Lopez, Javier
(86) International application number: PCT/ES2007/070169
(87) International publication number: WO 2008/043873

(57) **Abstract**

**Abstract:** The invention relates to a folding supporting structure intended preferably to be used as a supporting means for elements such as a steering wheel and pedals of the type used to play certain video games. The invention includes an H-shaped supporting base to which a slightly backward inclined post is pivotally connected such as to extend vertically therefrom. The aforementioned post is pivotally connected to a lower base associated with pedals and the corresponding end of the post is pivotally connected to an upper base such that, when not in use, the components can be collapsed onto one another in order to occupy a minimum amount of space. The different elements include hand-operated position-fixing elements.

## Description

### Object of the Invention

The present invention relates to a folding supporting structure for video game pedals and steering wheel, providing essential characteristics of novelty and notable advantages with respect to means that are known and used for the same ends in the current state of the art.

More specifically, the invention proposes the development of a support structure of the type of those designed for being used as support means for elements such as the steering wheel or the pedals of a video game, with the particular feature that it has been conceived with certain characteristics such that permit it to adopt adjustable positions of use for the components it comprises, together with an increased facility of an easy and rapid folding of the structure as a whole, so that it occupies a minimum amount of space, thereby facilitating its handling and transportation.

The field of application of the invention is obviously to be found in the industrial sector concerned with the manufacture and/or marketing of complementary peripheral devices for video games.

### Background and Summary of the Invention

The broad diffusion and diversification that video games have undergone in the last three decades is known to all in general. The great diversity of existing games, likewise related to a great diversity of different topics which seek to locate the player in a situation which, with a high degree of reality, reproduces real or fictitious practical situations, has allowed each player to be able to choose from among a range of possibilities within his preferred options.

However, simultaneously with the development of the games, an ever growing demand has revealed itself for effectiveness when it comes to the users interacting with the video games, and this has determined and guided the evolution and design of peripheral accessories. In this regard, the range currently to be found on the market serves only those proposals aimed at a market segment that is very limited on account of its complexity, thus shutting itself off from large areas of the market.

The existence of Spanish Invention Patent number P-200302503 is already known, in which is described an articulated support that is usable as a sustaining and support means for the steering wheel and pedals associated with certain video games, with which the use of this type of device is facilitated to a certain degree, said support displaying the particular feature that, by virtue of its adopted development, it provides the user with a functionality of allowing him to adopt the position that is most comfortable while playing the game, with the result of an attractive and realistic re-creation of the game, worthy of the possibilities of adjustment offered by the said support device.

The present invention alms to improve the conception of the device of the prior art by means of providing a support structure in which are incorporated not just the advantages of said prior device but which also offers the possibility of being completely folded, with all the advantages of storage and transportation that this entails. This objective has been achieved by means of the support structure that is going to be the object of description below, and whose main characteristics are defined in the characterising part of claim1 below.

In essence, the unit comprises a set of components associated with a post upright in the vertical plane with a certain backward inclination, among whose components are to be found elements such as a base for sustaining the unit on the floor or other similar plane, a lower support base for the pedals, and an upper support base for the steering wheel; the unions between the adjacent or coincident elements are articulated, while the relative positions are fixed with the use of threaded elements, such as screws or similar; moreover, the upper base associated with the steering wheel can be adjusted in height thanks to the provision of a telescopic section in the said post, the upper end of which is linked to the said collapsible upper base.

### Brief Description of the Drawings

These and other characteristics and advantages of the invention will be more clearly revealed on the basis of the detailed description that follows of a preferred form of embodiment, given solely by way of illustration without being limiting, with references to the attached drawings, in which:
Figure 1 shows views in lateral elevation (a), front elevation (b) and upper plan (c) of a support structure conceived in accordance with the present invention, and
Figure 2 show a set of four successive views (A-D) corresponding to a sequence of folding the structure of the invention.

### Description of a Preferred Form of Embodiment

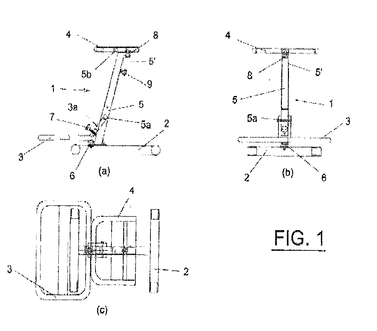

As mentioned above, the detailed description of the preferred form of embodiment of the structure proposed by the invention is going to be carried out in what follows with the help of the attached drawings, via which the same numerical references will be used for designating equal or similar parts. So, paying attention first of all to the illustrations included in Figure 1 of the drawings, the support structure that is advocated can be seen, designated in general with the numerical reference 1, consisting of a support base 2 constructed in the form of an 'H' with the use of tubular elements, a lower base 3 having a configuration that is substantially rectangular in plan view, associated with the pedals (not represented) of the video game, and an upper base 4 of configuration likewise rectangular In plan view, and associated with the steering wheel (not represented) of the video game. The said elements are connected together by means of a post 5, contained in the vertical plane but inclined slightly backwards in the upwards direction. The union between the post 5 and the support base 2 is an articulated joint, suitable for being fixed in the operating position by means of the hand operation of a screw 6 or similar; the union between the lower support base 3 for the pedals with respect to the post 5 is likewise articulated at the point 5a, with the use of a pin or similar, in a position close to the lower end of the post, while the position of the said lower base 3 with respect to the said post can be adjusted with the aid of a screw 7 or similar devices screwed to an Intermediate connecting rod 3a, resting via its lower end against the corresponding surface of the post 5, in such a way that the hand operation of the said screw 7 causes the said connecting rod to pivot with respect to the point of union 5a, which is accompanied by the corresponding change of position of the said lower support base 3 for the pedals; finally, the union between the upper support base 4 for the steering wheel is likewise a pivoting union with the upper end of the post 5 about a pivoting point 5b, the said base 4 being able to be fixed in its operating position by virtue of the action of a hand-operated screw 8 or similar.

As mentioned above, the position of the upper base 4 associated with the video game steering wheel can also be varied by adjusting its height. To do this, an upper section 5' of the post 5 is attached to the rest of the latter by means of a telescopic union that permits a greater or lesser extension, as wished. The securing of the telescopic section 5' in the chosen position is carried out with the aid of a hand-operated screw 9.

With an arrangement of the support structure like that described above, it will be understood that it is extremely easy and comfortable to handle, with increased possibilities of adjustment and adaptation of the position in which the user wishes to play the game.

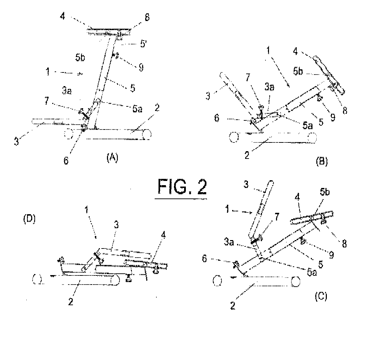

When it is wished to fold up the unit, whether for storage in the inactive state during a certain period of time or for the purposes of transportation, the operations to perform are those shown in illustrations A-D of the folding sequence appearing in Figure 2. The structure 1, in its operational state, is as it appears in illustration (A), with the different components mutually fixed to each other, and with the lower base 3 associated with the pedals and the upper base 4 associated with the steering wheel, generally in horizontal positions. The folding operation is commenced by turning the screw 6 in the unscrewing direction in order to release the post with respect to the support base 2, allowing this post 5 and the other component elements supported by it to be able to rotate with respect to the said support base 2. as Is schematically illustrated in the representation (B) of Figure 2. In the following sequence, corresponding to the representation (C), it can be seen how the upper base 4 associated with the steering wheel adopts an inclined position of approach to the actual direction of the longitudinal axis of the post 5, due to collapsing with respect to the pivoting point 5b, with prior release of its connecting union with the post by means of turning the screw 8 in the direction of unscrewing; in this representation it can also be seen that the lower base 3 associated with the pedals is also in an intermediate position of collapse on the actual post 5, due to pivoting with respect to the axis of union 5a with the said post. Finally, the representation (D) shows the final phase of the sequence, in which the structure 1 appears completely folded, due to the complete collapse of the post 5 on the support base 2, and due to collapse of the upper base 4 and the lower base 3 as far as planes that are practically parallel with the plane of the support base 2. In these conditions, the structure is ready for its easy and comfortable storage of transportation, occupying a minimum amount of space.

As will be understood, in order to set up the structure, the operations of the sequence shown in Figure 2 have to be repeated in reverse order, in other words, starting from the position (D) as far as arriving at position (A), for which it suffices to unfold the different components of the structure and secure them with the respective fastening screws associated with each of those components.

It is not considered necessary to make the content of this description more extensive in order for an expert in the subject to be able to comprehend its scope and the advantages deriving from the invention, as well as to be able to develop the inventive object and put it into practice.

Nevertheless, it must be understood that the invention has been described according to a preferred embodiment thereof, and it can therefore be liable to modifications without this implying any alteration at all to the basis of this invention, said modifications particularly affecting the shape, size and/or manufacturing materials of the whole or of the parts making it up.

## Claims

1. Folding supporting structure for video game pedals and steering wheel, in particular a structure designed and conceived such that the various components making it up are mutually folded or collapsed between them for the purpose of permitting certain minimum space needs for storage or transportation of the structure, **characterised in that** the structure (1) comprises:
a support and sustaining base (2) for the assembly, conceived for being positioned horizontally on the floor or other sustenance plane, preferably formed with tubular elements connected together adopting the shape of an 'H';
a general sustenance post (5) of the structure, which is extended according to a direction In the vertical plane, with a backward inclination as it ascends, being connected in collapsing fashion via the lower end to the said support base (2);
a lower base (3), intended to serve as support element for the pedals used in the video game, being extended in a substantially horizontal plane and having a variable position, pivotally articulated to said post (5) at a pivoting point (5a) located in a position close to the lower end of the post, there existing an intermediate connecting rod (3a) extended between the said lower base (3) and the said pivoting point (5a), and
an upper base (4), with a substantially horizontal position, intended to serve as support means for the steering wheel used in the video game, which is articulated at the upper end of the said post (5) by means of a pivoting joint (5b).

2. The structure according to claim 1, **characterised in that** the post (5) includes a telescopic upper section (5'), capable of being secured at the desired height of its travel with the help of a hand-operated screw (9).

3. The structure according to claims 1 and 2, **characterised in that** the said connecting rod (3a) for articulated joint between the lower base (3) and the point (5a) of the post (5) includes a hand-operated screw (7) which, via its innermost end rests on the surface of the corresponding facing side of said post, and whose manual operation permits adjustment of the relative position of the said lower base (3) with respect to the post (5).

4. The structure according to claims 1 to 3, **characterised in that** the said base (4) includes a hand-operated screw (8) for securing the base (4) in its operating position with respect to the post (5).
